# EUROPÄISCHE PATENTSCHRIFT

(11) **EP 2 072 288 B1**
(45) Veröffentlichungstag und Bekanntmachung des Hinweises auf die Patenterteilung: **29.09.2010**
(21) Anmeldenummer: 08168143.9
(22) Anmeldetag: 03.11.2008
(51) Int. Cl.: B60C 11/13

(54) **Fahrzeugluftreifen**
Pneumatic tyres for a vehicle
Pneus de véhicule

(30) Priorität: 20.12.2007 DE 102007062416
(43) Veröffentlichungstag der Anmeldung: 24.06.2009
(73) Patentinhaber: Continental Reifen Deutschland GmbH, 30165 Hannover (DE)
(72) Erfinder: Ackermann, Lutz, 38539 Müden (DE); Weber, Christian, 30826 Garbsen (DE); Zernetsch, Bernhard, 30926 Seelze (DE)
(74) Vertreter: Finger, Karsten

(56) Entgegenhaltungen:
- JP-A- 2 179 508
- JP-A- 2001 121 923
- JP-A- 2004 203 173
- JP-A- 2006 224 926

## Beschreibung

Die Erfindung betrifft einen Fahrzeugluftreifen mit einem Laufstreifen mit einer Anzahl von in Umfangsrichtung umlaufenden Umfangsrillen, welche Profilelemente, wie Blockreihen oder Profilrippen, von einander trennen, wobei zumindest eine schulterseitig verlaufende Umfangsrille, zumindest innerhalb von Umfangsabschnitten, an der Laufstreifenoberfläche eine wesentlich größere Breite aufweist als im Bereich des Rillengrundes und zumindest eine Rillenflanke aufweist, welche sich aus zwei Flankenabschnitten zusammensetzt, von welchen der eine Flankenabschnitt unmittelbar an den insbesondere bogenförmig gekrümmten Rillengrund anschließt und der andere Flankenabschnitt an die Laufstreifenoberfläche anschließt und einen größeren Neigungswinkel gegenüber der radialen Richtung aufweist, wobei, im Querschnitt betrachtet, sich der Schnittpunkt D zwischen den beiden Flankenabschnitten in einem Abstand vom radial innersten Punkt A des Rillengrundes befindet, der zwischen 40 % und 85 % der Profiltiefe beträgt, wobei der zweite, der Laufstreifenoberfläche benachbart verlaufende Flankenabschnitt, im Querschnitt betrachtet, innerhalb eines Viereckes GEDF verläuft, wobei G der Schnittpunkt dieses Flankenabschnittes mit der Oberfläche des Laufstreifens ist, wobei F der Schnittpunkt einer in axialer Richtung verlaufenden Geraden durch den Punkt D mit einer in radialer Richtung verlaufenden, durch G gehenden Geraden ist, wobei E der Schnittpunkt zwischen einer durch den Punkt D gehenden, in radialer Richtung verlaufenden Geraden mit einer in axialer Richtung verlaufenden Geraden ist, welche in einem radialen Abstand, welcher 85 % der Profiltiefe beträgt, vom radial innersten Punkt A verläuft.

Ein Fahrzeugluftreifen der eingangs genannten Art ist beispielsweise aus der JP2004203173A bekannt. Dieser Reifen weißt einen Laufstreifen mit Umfangsrillen auf, die im Querschnitt deutlich V-förmig ausgeführt sind, wobei eine der Rillenflanken zwei Flankenabschnitte aufweist, von welchen der der Laufstreifenoberfläche benachbart verlaufende Flankenabschnitt einen größeren Neigungswinkel gegenüber der radialen Richtung aufweist als der zweite, an den Rillengrund anschließende Flankenabschnitt. Aus der JP2001121923A ist ein Fahrzeugluftreifen bekannt, dessen Laufstreifen Umfangsrillen mit Rillenflanken aufweist, von welchen die eine konvex gekrümmt und die andere konkav gekrümmt verläuft. Aus der JP2006224926A und der JP2179508A sind Fahrzeugluftreifen mit Laufstreifen bekannt, deren Profilblöcke oder Profilrippen angefaste Randbereiche aufweisen.

Ein weiterer Fahrzeugluftreifen mit Umfangsrillen ist aus der US-A-5,450,885 bekannt. Die Umfangsrillen sind mit Rillenflanken versehen, welche im Querschnitt bogenförmig gekrümmt sind, derart, dass sich ihr Neigungswinkel relativ zur radialen Richtung von der Laufstreifenoberfläche in Richtung Nutgrund kontinuierlich verringert. Ein Reifen mit derart ausgeführten Umfangsnuten soll im Betrieb besonders geräuscharm sein, insbesondere soll in diesen Umfangsrillen das Auftreten von Luftresonanzen verhindert sein. Aus der EP-B-1106395 ist ein Reifen bekannt, welcher einen Laufflächenabschnitt aufweist, in welchem eine Formteilungslinie durch eine einfach geteilte Form auf oder nahe dem Reifenäquator verläuft, der einen rechten Teil des Laufflächenabschnitts auf einer Seite der Formteilungslinie und einen linken Teil auf der anderen Seite definiert. Der Laufflächenabschnitt ist in zumindest einem zentralen Teil mit Laufflächenrillen versehen, die jeweils eine rechte Rillenwand und eine linke Rillenwand aufweisen. Im rechten Teil sind die rechten Rillenwände zumindest teilweise mit einem geneigten Teil versehen, der von der Lauffläche in Richtung des Rillengrundes verläuft, während er nach links geneigt ist, wobei die linken Rillenwände weniger geneigt sind als der geneigte Teil der entsprechenden gegenüberliegenden rechten Rillenwände. Im linken Teil sind die linken Rillenwände zumindest teilweise mit einem geneigten Teil versehen, der von der Lauffläche in Richtung des Rillengrundes verläuft, während er nach rechts geneigt ist, wobei die rechten Rillenwände weniger geneigt sind als der geneigte Teil der entsprechenden gegenüberliegenden linken Rillenwände. Diese besondere Ausführung der Umfangsrillen ermöglicht es, bei der Verwendung zweigeteilter Vulkanisationsformen die Ausformbarkeit des fertig vulkanisierten Reifens wesentlich zu erleichtern.

Üblicherweise werden die Umfangsrillen in Laufstreifen von Fahrzeugluftreifen mit Rillenflanken versehen, die, ausgehend vom Nutgrund, unter einem konstanten Winkel in der Größenordnung von 5° bis 10° zur radialen Richtung geneigt verlaufen. Der Nutgrund herkömmlich ausgeführter Umfangsrillen, vor Allem in Laufstreifen von Schwerlastfahrzeugen und Transportern, ist insbesondere in der ersten Hälfte der Lebensdauer des Reifens rissanfällig, wodurch die Haltbarkeit des Reifens vermindert wird. Eine wesentlich größere Neigung der Rillenflanken relativ zur radialen Richtung würde zwar die Rissanfälligkeit verringern, hätte jedoch den Nachteil, die Stabilität und Steifigkeit der Profilelemente zu reduzieren und damit einen ungleichförmigen Abrieb zu fördern. Durch das geringere Laufstreifenvolumen wird ferner das Abriebsvolumen reduziert.

Der Erfindung liegt die Aufgabe zugrunde, bei einem Reifen der eingangs genannten Art die Rillenflankengeometrie derart zu gestalten, dass das Auftreten von Rissen am Grund von Umfangsrillen verhindert wird und gleichzeitig die Haltbarkeit des Reifens und der Abrieb des Laufstreifens nicht beeinträchtigt werden.

Gelöst wird die gestellte Aufgabe erfindungsgemäß dadurch, dass der an den Rillengrund anschließende Flankenabschnitt in einem Abstand vom radial innersten Punkt A des Rillengrundes beginnt, welcher zwischen 5 % und 20 % der Profiltiefe beträgt und vorerst leicht bogenförmig gekrümmt ist und dann in radialer Richtung verläuft.

Erfindungsgemäß ausgeführte Umfangsrillen weisen zumindest eine Rillenflanke auf, welche vom Rillengrund ausgehend vorerst mit konstanter bzw. geringfügig größer werdender Breite ausgeführt ist. Im zweiten Flankenabschnitt erfolgt eine deutliche Verbreiterung der Umfangsrille. Diese Maßnahme bewirkt unter Belastung eine Entlastung des Rillengrundes, sodass die Rissanfälligkeit am Rillengrund deutlich zurückgeht. Diese entlastende Wirkung ist vor Allem während der ersten Hälfte der Lebensdauer eines Reifens von Bedeutung. Mit zunehmenden Laufstreifenabrieb und in einer späteren "Lebensphase" des Reifens, bei bereits reduzierter Profiltiefe, ist es von Vorteil, wenn die Umfangsrille eine geringe Breite und einen Teilbereich mit einem relativ kleinen Volumen aufweisen. Dieser Teilbereich bewirkt eine Stabilisierung und Erhöhung der Steifigkeit der der Umfangsrille benachbarten Profilelemente, sodass ein gleichmäßiger Abrieb des Laufstreifens gewährleistet wird.

Gemäß einer bevorzugten Ausführungsform der Erfindung kann der innerhalb des Viereckes GEDF verlaufende Flankenabschnitt derart ausgeführt sein, dass er entlang einer die Punkte G und E verbindenden Geraden verläuft. Möglich sind auch Ausführungen dieses Flankenabschnittes mit einem konvex oder konkav gekrümmten Verlauf. Diese alternativen Ausführungsformen haben unterschiedliche Auswirkungen auf das Ausmaß der Entlastung des Rillengrundes.

Nachdem die entlastende Wirkung vor Allem während der ersten Hälfte der Lebensdauer eines Reifens von Bedeutung ist, ist es von Vorteil, wenn der radiale Abstand des Schnittpunktes D zwischen den Flankenabschnitten vom radial innersten Punkt A des Rillengrundes zwischen 50 % und 80 % der Profiltiefe beträgt. Auch der Verlauf des Rillengrundes hat gewisse Auswirkungen auf die Rissanfälligkeit. Diesbezüglich ist es von Vorteil, wenn der an den Rillengrund anschließende Flankenabschnitt in einem Abstand vom radial innersten Punkt A des Rillengrundes beginnt, welcher zwischen 5 % und 20 %, insbesondere zwischen 7 % und 15 %, der Profiltiefe beträgt. Zur weiteren Reduzierung der Rissanfälligkeit im Rillengrund ist es von Vorteil, wenn der Normalabstand zwischen dem radial inneren Ende des an den Rillengrund anschließenden Flankenabschnittes und einer Mittellinie, die sich in radialer Richtung durch den radial innersten Punkt A des Rillengrundes erstreckt, mindestens 1,5 mm beträgt und wenn der Normalabstand zwischen dem Punkt D und der Mittellinie größer ist als der Normalabstand des radial inneren Endes des an den Rillengrund anschließenden Flankenabschnittes zur erwähnten Mittellinie.

Dabei sollte der Normalabstand zwischen dem Punkt D und der Mittellinie kleiner sein als 4 % der Laufstreifenbreite.

Weitere Merkmale, Vorteile und Einzelheiten der Erfindung werden nun anhand der Zeichnung, die schematisch ein Ausführungsbeispiel darstellt, näher beschrieben. Dabei zeigen
Fig. 1 einen Querschnitt durch einen Teilbereich eines Laufstreifens eines Fahrzeugluftreifens und
Fig. 2 einen Rillenquerschnitt in vergrößerter Darstellung.

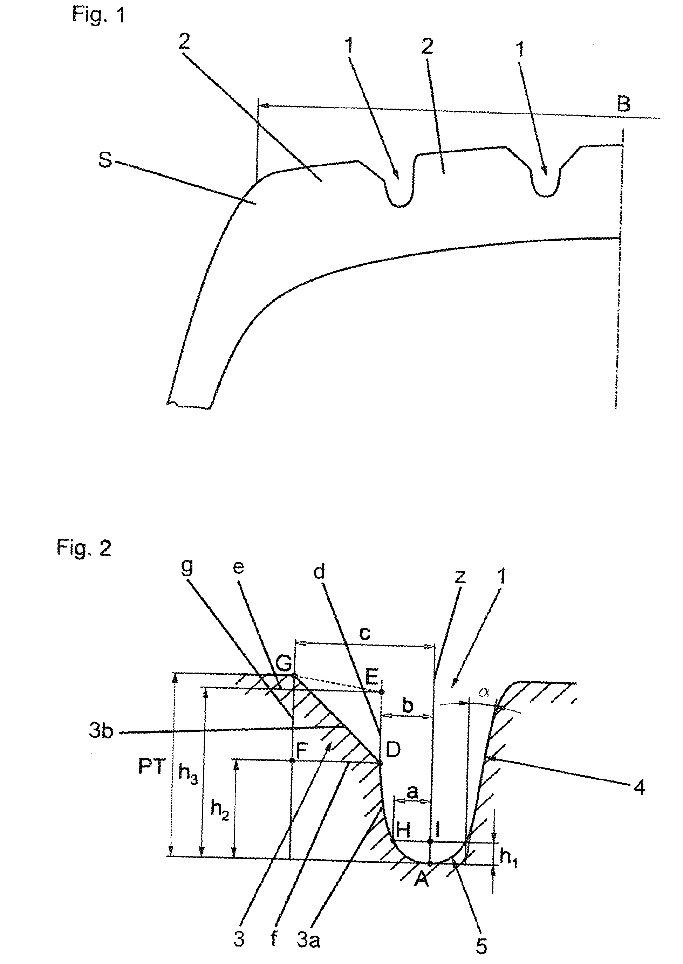

Fig. 1 zeigt einen Querschnitt durch einen Teilbereich eines Laufstreifens für einen Fahrzeugluftreifen, wobei der Laufstreifen eine Anzahl von breiten und auf Profiltiefe ausgeführten sowie in Umfangsrichtung umlaufenden Umfangsrillen 1 aufweist. In Fig. 1 sind zwei dieser Umfangsrillen 1 dargestellt, welche Profilrippen oder Profilblockreihen 2 begrenzen bzw. voneinander trennen.

Fig. 2 zeigt einen Querschnitt durch die der Reifenschulter S benachbarte Umfangsrille 1 der Fig. 1. Die Umfangsrille 1 weist eine der Reifenschulter S zugewandte Rillenflanke 3, eine zweite, dieser gegenüberliegende Rillenflanke 4 sowie einen Rillengrund 5 auf. Der Rillengrund 5 ist bei der gezeigten Ausführungsvariante bogenförmig, beispielsweise kreisbogenförmig oder kreisbogenähnlich, ausgeführt und endet in einem Abstand h₁ vom radial innersten Punkt A des Rillengrundes 5, welcher zwischen 5 % und 20 % der Profiltiefe PT, vorzugsweise zwischen 7 % und 15 % der Profiltiefe PT, beträgt. An der Rillenflanke 3 wird das radial äußere Ende des Rillengrundes 5 im Querschnitt durch einen Punkt H bestimmt, welcher sich in einem Normalabstand a > 1,5 mm von einer durch den Punkt A gehenden und in radialer Richtung verlaufenden Mittellinie z befindet. Die Rillenflanke 4 ist bei der in Fig. 2 gezeigten Ausführung analog einer üblichen Rillenflanke mit einer geringfügigen Neigung zur radialen Richtung versehen, der diesbezügliche Winkel α beträgt zwischen 2° und 10°, wobei sich durch die Neigung der Rillenflanke 4 die Breite der Umfangsrille 1 zur Laufstreifenoberfläche etwas vergrößert. Die Rillenflanke 3 weist zwei Flankenabschnitte 3a und 3b auf. Der Flankenabschnitt 3a schließt unmittelbar an den Rillengrund 5 an und ist vorerst leicht bogenförmig gekrümmt und verläuft dann in radialer Richtung. Der Flankenabschnitt 3a endet in einem Abstand h₂ vom radial innersten Punkt A des Rillengrundes 5, welcher zwischen 40 % und 85 % der

Profiltiefe PT, vorzugsweise zwischen 50 % und 80 % der Profiltiefe PT, beträgt. Das radial äußere Ende des Flankenabschnittes 3a ist im Querschnitt durch die Lage eines Punktes D bestimmt, welcher sich in einem Normalabstand b > a zur Mittellinie z befindet, wobei b in jedem Fall kleiner als 4 % der Laufstreifenbreite B ist, welche die Breite des Reifens in der Bodenaufstandsfläche ist. B ist lediglich in Fig. 1 beim gezeigten Laufstreifenrand beziehungsweise Schulterbereich S angedeutet.

Der Flankenabschnitt 3b verläuft innerhalb eines Viereckes GEDF. D ist, wie erwähnt, das radial äußere Ende des Flankenabschnittes 3a, G ist der Schnittpunkt des Flankenabschnittes 3b mit der Oberfläche des Laufstreifens, der Punkt F befindet sich im Schnittpunkt einer in axialer Richtung verlaufenden Geraden f durch den Punkt D, daher im Abstand h₂ vom axial innersten Punkt A, mit einer in radialer Richtung verlaufenden, durch G gehenden Geraden g. Der Punkt E ist der Schnittpunkt zwischen einer durch den Punkt D gehenden, in radialer Richtung verlaufenden Geraden d mit einer in axialer Richtung verlaufenden Geraden e, welche in einem radialen Abstand h₃ von 85 % der Profiltiefe PT vom radial innersten Punkt A verläuft. Innerhalb des Viereckes GEDF kann der Flankenabschnitt 3b wie dargestellt entlang einer G und E verbindenden Geraden verlaufen, oder zwischen den Punkten G und E einen konvex oder konkav gekrümmten Verlauf aufweisen. Das Ausmaß der Krümmung kann sich über den Verlauf des Abschnittes 3b auch ändern.

Bei neuen Reifen wird die Breite der Umfangsrille 1 insbesondere durch den Normalabstand c zwischen der Kante der Rillenflanke 3 an der Laufstreifenoberfläche und der Mittellinie z bestimmt. Der Abstand c sollte bei erfindungsgemäß ausgeführten Umfangsrillen zumindest um das Dreifache größer sein als der Abstand a.

Erfindungsgemäß ausgeführte Umfangsrillen 1 können entweder die in Fig. 2 gezeigte bezüglich der Mittellinie z asymmetrische Ausführung der Rillenflanken 3 und 4 aufweisen oder es können beide Rillenflanken gemäß der Rillenflanke 3, wie beschrieben, ausgeführt und dabei symmetrisch oder asymmetrisch zur Mittellinie z verlaufen, beispielsweise entsprechend der zweiten in Fig. 1 gezeigten Umgangsrille 1.

Umfangsrillen mit erfindungsgemäß ausgeführten Rillenflanken sind vor Allem in Laufstreifen von Schwerlastfahrzeugen oder Transportern von besonderem Vorteil. Gerade bei diesen Reifentypen ist der Rillengrund von herkömmlich ausgeführten Umfangsrillen rissanfällig, insbesondere in der ersten Hälfte der Lebensdauer des Reifens. Durch eine erfindungsgemäße Ausführung zumindest einer der beiden Rillenflanken einer Umfangsrille wird der Rillengrund, insbesondere durch die relativ große Breite der Rille an der Laufstreifenoberfläche, entlastet. Mit fortschreitendem Abrieb sinkt die Wahrscheinlichkeit des Auftretens von Rissen am Rillengrund. Der nun maßgebliche Teil der Umfangsrillen sollte den Laufstreifen stabilisieren, um einen gleichmäßigen Abrieb zu gewährleisten. Dies wird bei erfindungsgemäß ausgeführten Umfangsrillen 1 durch den Flankenabschnitt 3a gewährleistet.

### Bezugszeichenliste

- 1: Umfangsrille
- 2: Rippe/Blockreihe
- 3: Rillenflanken
- 3a: Flankenabschnitt
- 3b: Flankenabschnitt
- 4: Rillenflanken
- 5: Rillengrund
- h₁: Abstand
- h₂: Abstand
- h₃: Abstand
- PT: Profiltiefe
- A: Punkt
- B: Laufstreifenbreite
- D: Punkt
- E: Punkt
- F: Punkt
- G: Punkt
- a: Abstand
- b: Abstand
- c: Abstand
- z: Mittellinie
- d: Gerade
- e: Gerade
- f: Gerade
- α: Winkel

## Patentansprüche

1. Fahrzeugluftreifen mit einem Laufstreifen mit einer Anzahl von in Umfangsrichtung umlaufenden Umfangsrillen (1), welche Profilelemente (2), wie Blockreihen oder Profilrippen, von einander trennen, wobei zumindest eine schulterseitig verlaufende Umfangsrille (1), zumindest innerhalb von Umfangsabschnitten, an der Laufstreifenoberfläche eine wesentlich größere Breite aufweist als im Bereich des Rillengrundes (5) und zumindest eine Rillenflanke (3) aufweist, welche sich aus zwei Flankenabschnitten (3a, 3b) zusammensetzt, von welchen der eine Flankenabschnitt (3a) unmittelbar an den insbesondere bogenförmig gekrümmten Rillengrund (5) anschließt und der andere Flankenabschnitt (3b) an die Laufstreifenoberfläche anschließt und einen größeren Neigungswinkel gegenüber der radialen Richtung aufweist, wobei, im Querschnitt betrachtet, sich der Schnittpunkt D zwischen den beiden Flankenabschnitten (3a, 3b) in einem Abstand (h₂) vom radial innersten Punkt A des Rillengrundes (5) befindet, der zwischen 40 % und 85 % der Profiltiefe (PT) beträgt, wobei der zweite, der Laufstreifenoberfläche benachbart verlaufende Flankenabschnitt (3b), im Querschnitt betrachtet, innerhalb eines Viereckes GEDF verläuft, wobei G der Schnittpunkt dieses Flankenabschnittes (3b) mit der Oberfläche des Laufstreifens ist, wobei F der Schnittpunkt einer in axialer Richtung verlaufenden Geraden (f) durch den Punkt D mit einer in radialer Richtung verlaufenden, durch G gehenden Geraden (g) ist, wobei E der Schnittpunkt zwischen einer durch den Punkt D gehenden, in radialer Richtung verlaufenden Geraden (d) mit einer in axialer Richtung verlaufenden Geraden (e) ist, welche in einem radialen Abstand (h₃), welcher 85 % der Profiltiefe (PT) beträgt, vom radial innersten Punkt A verläuft,
**dadurch gekennzeichnet,**
der an den Rillengrund (5) anschließende Flankenabschnitt (3a) in einem Abstand (h₁) vom radial innersten Punkt A des Rillengrundes (5) beginnt, welcher zwischen 5 % und 20 % der Profiltiefe (PT) beträgt und vorerst leicht bogenförmig gekrümmt ist und dann in radialer Richtung verläuft.

2. Fahrzeugluftreifen nach Anspruch 1, **dadurch gekennzeichnet, dass** innerhalb des Viereckes GEDF der Flankenabschnitt (3b), im Querschnitt betrachtet, entlang einer die Punkte G und E verbindenden Geraden verläuft.

3. Fahrzeugluftreifen nach Anspruch 1, **dadurch gekennzeichnet, dass** innerhalb des Viereckes GEDF der Flankenabschnitt (3b), im Querschnitt betrachtet, einen konvex oder konkav gekrümmten Verlauf aufweist.

4. Fahrzeugluftreifen nach Anspruch 1, **dadurch gekennzeichnet, dass** der radiale Abstand (h₁) des Schnittpunktes D zwischen den beiden Flankenabschnitten (3a, 3b) vom radial innersten Punkt A des Rillengrundes (5) zwischen 50 % und 80 % der Profiltiefe (PT) beträgt.

5. Fahrzeugluftreifen nach Anspruch 1, **dadurch gekennzeichnet, dass** der Abstand (h₁) zwischen 7 % und 15 % der Profiltiefe (PT) beträgt.

6. Fahrzeugluftreifen nach einem der Ansprüche 1 bis 5, **dadurch gekennzeichnet, dass** der Normalabstand (a) zwischen dem radial inneren Ende des an den Rillengrund (5) anschließenden Flankenabschnittes (3a) und einer Mittellinie (z), die sich in radialer Richtung durch den radial innersten Punkt A des Rillengrundes (5) erstreckt, mindestens 1,5 mm beträgt.

7. Fahrzeugluftreifen nach einem der Ansprüche 1 bis 6, **dadurch gekennzeichnet, dass** der Normalabstand (b) zwischen dem Punkt D und der Mittelinie (z) größer ist als der Normalabstand (a) des radial inneren Endes des an den Rillengrund (5) anschließenden Flankenabschnittes (3a) zur Mittellinie (z).

8. Fahrzeugluftreifen nach einem der Ansprüche 1 bis 7, **dadurch gekennzeichnet, dass** der Normalabstand (b) zwischen dem Punkt D und der Mittelinie (z) kleiner ist als 4 % der Laufstreifenbreite (B).

## Claims

1. Vehicle pneumatic tyre having a tread with a number of circumferential channels (1) which run around in the circumferential direction and which separate profile elements (2), such as block rows or profile ribs, from one another, wherein at least in circumferential sections, at least one circumferential channel (1) which runs on the shoulder side has a significantly greater width on the tread surface than in the region of the channel base (5) and has at least one channel flank (3) which is composed of two flank sections (3a, 3b) of which one flank section (3a) directly adjoins the channel base (5), which is in particular curved in the shape of an arc, and the other flank section (3b) adjoins the tread surface and has a greater angle of inclination relative to the radial direction, wherein as viewed in cross section, the point of intersection D between the two flank sections (3a, 3b) is situated at a distance (h₂) from the radially innermost point A of the channel base (5), which distance (h₂) amounts to between 40% and 85% of the profile depth (PT), wherein the second flank section (3b), which runs adjacent to the tread surface, runs as viewed in cross section within a tetragon GEDF, where G is the point of intersection of said flank section (3b) with the surface of the tread, where F is the point of intersection of a straight line (f) which runs in the axial direction through the point D with a straight line (g) which runs in the radial direction and passes through G, where E is the point of intersection of a straight line (d) which runs in the radial direction through the point D with a straight line (e) which runs in the axial direction and at a radial distance (h₃), which amounts to 85% of the profile depth (PT), from the radially innermost point A, **characterized**
**in that** the flank section (3a) adjoining the channel base (5) begins at a distance (h₁), which amounts to between 5% and 20% of the profile depth (PT), from the radially innermost point A of the channel base (5) and is initially curved slightly in the shape of an arc and then runs in the radial direction.

2. Vehicle pneumatic tyre according to Claim 1, **characterized in that**, within the tetragon GEDF, the flank section (3b), as viewed in cross section, runs along a straight line connecting the points G and E.

3. Vehicle pneumatic tyre according to Claim 1, **characterized in that**, within the tetragon GEDF, the flank section (3b), as viewed in cross section, has a convexly or concavely curved profile.

4. Vehicle pneumatic tyre according to Claim 1, **characterized in that** the radial distance (h₁) of the point of intersection D between the two flank sections (3a, 3b) from the radially innermost point A of the channel base (5) amounts to between 50% and 80% of the profile depth (PT).

5. Vehicle pneumatic tyre according to Claim 1, **characterized in that** the distance (h₁) amounts to between 7% and 15% of the profile depth (PT).

6. Vehicle pneumatic tyre according to one of Claims 1 to 5, **characterized in that** the normal distance (a) between the radially inner end of the flank section (3a) adjoining the channel base (5) and a central line (z) extending in the radial direction through the radially innermost point A of the channel base (5) amounts to at least 1.5 mm.

7. Vehicle pneumatic tyre according to one of Claims 1 to 6, **characterized in that** the normal distance (b) between the point D and the central line (z) is greater than the normal distance (a) of the radially inner end of the flank section (3a) adjoining the channel base (5) to the central line (z).

8. Vehicle pneumatic tyre according to one of Claims 1 to 7, **characterized in that** the normal distance (b) between the point D and the central line (z) is less than 4% of the tread width (B).

## Revendications

1. Pneumatique de véhicule comprenant une bande de roulement avec un certain nombre de rainures périphériques (1) tournant dans la direction périphérique, lesquelles séparent des éléments profilés (2) les uns des autres, tels que des rangées de bloc ou des nervures profilées, au moins une rainure périphérique (1) agencée côté épaulement présentant, au moins à l'intérieur des parties périphériques, sur la surface de la bande de roulement une largeur nettement plus grande que dans la zone du fond de rainure (5) et au moins un flanc de rainure (3), qui se compose de deux parties de flanc (3a, 3b) dont une partie de flanc (3a) se raccorde directement au fond de rainure (5) incurvé, en particulier en forme d'arc, et l'autre partie de flanc (3b) se raccorde à la surface de bande de roulement et présente un angle d'inclinaison plus grand par rapport au sens radial, le point d'intersection D entre les deux parties de flanc (3a, 3b), vu en section, se trouvant à une distance (h₂) du point A le plus intérieur radialement du fond de rainure (5), qui représente entre 40 % et 85 % de la profondeur de sculpture (PT), la seconde partie de flanc (3b) agencée à proximité de la surface de bande de roulement se trouvant, vue en section, à l'intérieur d'un carré GEDF, G étant le point d'intersection de cette partie de flanc (3b) avec la surface de la bande de roulement, F étant le point d'intersection d'une droite (f) agencée dans le sens axial passant par le point D avec une droite (g) agencée dans le sens radial et passant par G, E étant le point d'intersection entre une droite (d) passant par le point D et agencée dans le sens radial avec une droite (e) agencée dans le sens radial, laquelle est située à une distance (h₃) radiale, qui représente 85 % de la profondeur de sculpture (PT), par rapport au point A le plus intérieur radialement, **caractérisé en ce que**
la partie de flanc (3a) se raccordant au fond de rainure (5) commence à une distance (h₁) du point A le plus intérieur radialement du fond de rainure (5), qui représente entre 5 % et 20 % de la profondeur de sculpture (PT) et est incurvé auparavant légèrement en forme d'arc et s'étend ensuite dans le sens radial.

2. Pneumatique de véhicule selon la revendication 1, **caractérisé en ce que**, à l'intérieur du carré GEDF, la partie de flanc (3b) s'étend, vue en section, le long d'une droite reliant les points G et E.

3. Pneumatique de véhicule selon la revendication 1, **caractérisé en ce que**, à l'intérieur du carré GEDF, la partie de flanc (3b) présente, vue en section, un tracé incurvé de façon convexe ou concave.

4. Pneumatique de véhicule selon la revendication 1, **caractérisé en ce que** la distance radiale (h₁) du point d'intersection D entre les deux parties de flanc (3a, 3b) au point A le plus intérieur radialement du fond de rainure (5) représente entre 50 % et 80 % de la profondeur de sculpture (PT).

5. Pneumatique de véhicule selon la revendication 1, **caractérisé en ce que** la distance (h₁) représente entre 7 % et 15 % de la profondeur de sculpture (PT).

6. Pneumatique de véhicule selon l'une quelconque des revendications 1 à 5, **caractérisé en ce que** la distance normale (a) entre l'extrémité radialement intérieure de la partie de flanc (3a) se raccordant au fond de rainure (5) et une ligne médiane (z), qui s'étend dans le sens radial en passant par le point A le plus intérieur radialement du fond de rainure (5), est d'au moins 1,5 mm.

7. Pneumatique de véhicule selon l'une quelconque des revendications 1 à 6, **caractérisé en ce que** la distance normale (b) entre le point D et la ligne médiane (z) est supérieure à la distance normale (a) de l'extrémité radialement intérieure de la partie de flanc (3a) se raccordant au fond de rainure (5) à la ligne médiane (z).

8. Pneumatique de véhicule selon l'une quelconque des revendications 1 à 7, **caractérisé en ce que** la distance normale (b) entre le point D et la ligne médiane (z) est inférieure à 4 % de la largeur de la bande de roulement (B).
